(19) **Europäisches Patentamt / European Patent Office / Office européen des brevets**

(11) **EP 4 523 935 A1**

(12) **EUROPEAN PATENT APPLICATION**
published in accordance with Art. 153(4) EPC

(43) Date of publication:
**19.03.2025 Bulletin 2025/12**

(21) Application number: **23830377.0**

(22) Date of filing: **29.06.2023**

(51) International Patent Classification (IPC):
**B60J 1/17** (2006.01)    **E05F 15/689** (2015.01)
**B60J 10/76** (2016.01)

(86) International application number:
**PCT/CN2023/103585**

(87) International publication number:
**WO 2024/002208 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.06.2022 CN 202210762585**

(71) Applicant: **Fuyao Glass Industry Group Co., Ltd.**
**Fuqing, Fujian 350300 (CN)**

(72) Inventors:
• **ZHANG, Jianming**
  **Fuqing, Fujian 350300 (CN)**
• **WU, Shenggui**
  **Fuqing, Fujian 350300 (CN)**
• **CHEN, Lidong**
  **Fuqing, Fujian 350300 (CN)**

(74) Representative: **Patentanwälte Olbricht Buchhold Keulertz**
**Partnerschaft mbB**
**Neue Mainzer Straße 75**
**60311 Frankfurt am Main (DE)**

(54) **VEHICLE DOOR GLASS ASSEMBLY, VEHICLE DOOR ASSEMBLY AND VEHICLE**

(57)    Disclosed in the present disclosure are a vehicle door glass assembly, a vehicle door assembly and a vehicle. The vehicle door glass assembly includes: a vehicle door glass (1) with a first end (11) and a second end (12) which are opposite to each other along a length direction thereof, the first end (11) and the second end (12) of the vehicle door glass (1) being configured for sealed sliding fit with a vehicle door body along a lifting direction, the vehicle door glass (1) being driven by a lifting mechanism (9) to move along the lifting direction, and a force-bearing point between the lifting mechanism (9) and the vehicle door glass (1) being a main support point; and a counterweight structure (2) mounted on the vehicle door glass (1); in which in a state where the vehicle door glass (1) moves along the lifting direction, the center of gravity of the vehicle door glass (1) is adjusted by means of the counterweight structure (2), and moments of force generated by forces acting on the vehicle door glass (1) relative to the main support point are balanced with each other. The present disclosure can prevent the end of the vehicle door glass 1 with poor stability from being tilted towards an end with good stability, so as to avoid jamming, while preventing a sealing failure between the vehicle door glass (1) and the vehicle door body.

FIG.1

**Description**

RELATED APPLICATION

The present disclosure claims priority to Chinese Patent Application No. 202210762585.5, an invention title of "vehicle door glass assembly, vehicle door assembly and vehicle" and filed on June 30, 2022.

TECHNICAL FIELD

The present disclosure relates to the technical field of vehicles, and particularly to a vehicle door glass assembly, a vehicle door assembly and a vehicle.

BACKGROUND

A flush vehicle door glass assembly widely used at present is equipped with guide brackets bonded at front and rear ends of the vehicle door glass. The guide bracket is clamped and assembled with a sealing strip on a vehicle door sheet-metal guide rail, and an outer surface of the vehicle door glass is flush with the sealing strip, i.e., an inner surface of the vehicle door glass, the guide bracket and an edge of the vehicle door glass are overlapped with the sealing strip, and the outer surface of the vehicle door glass is not overlapped with the sealing strip. Through the fit between the guide bracket and the sealing strip, a better guiding effect is achieved in the vertical lifting and sliding of the vehicle door glass. Meanwhile, during the travelling of the vehicle, due to the clamping between the guide bracket and the sealing strip, the glass can be better stabilized and the glass can be prevented from vibration under an action of airflow. However, there are problems of jamming caused by the lifting and sliding of the glass, and leakages of air and water caused by the fact that the glass is easy to deviate along its extension direction and the sealing strip at one end is worn.

SUMMARY

The present disclosure aims to provide a vehicle door glass assembly, a vehicle door assembly and a vehicle, so as to solve the existing problems of jamming caused by the lifting and sliding of the vehicle door glass, and leakages of air and water caused by the fact that the glass is easy to deviate along a horizontal direction and a sealing strip at one end is worn.

The above objective of the present disclosure can be achieved by the following technical solutions.

The present disclosure provides a vehicle door glass assembly, including: a vehicle door glass with a first end and a second end which are opposite to each other along a length direction of the vehicle door glass, the first end and the second end of the vehicle door glass being configured for sealed sliding fit with a vehicle door body along a lifting direction, the vehicle door glass being driven by a lifting mechanism to move along the lifting direction, and a force-bearing point between the lifting mechanism and the vehicle door glass being a main support point; and a counterweight structure mounted on the vehicle door glass; in which in a state where the vehicle door glass moves along the lifting direction, the center of gravity of the vehicle door glass is adjusted by the counterweight structure, and moments of force generated by forces acting on the vehicle door glass relative to the main support point are balanced with each other.

The present disclosure further provides a vehicle door assembly, including the aforementioned vehicle door glass assembly, the vehicle door assembly further including: the vehicle door main body; and the lifting mechanism mounted on the vehicle door body.

The present disclosure further provides a vehicle, including the aforementioned vehicle door assembly.

The present disclosure has the following characteristics and advantages:

In the vehicle door glass assembly, the vehicle door assembly and the vehicle according to the present disclosure, a counterweight structure is disposed on a vehicle door glass, and in a state where the vehicle door glass moves along a lifting direction, the center of gravity of the vehicle door glass is adjusted by the counterweight structure, so that moments of force generated by forces acting on the vehicle door glass relative to a main support point between a lifting mechanism and the vehicle door glass can be balanced with each other, the stability of an end of the vehicle door glass with poor stability can be improved, and the end of the vehicle door glass with poor stability can be prevented from being tilted towards an end with good stability, thereby ensuring that the lifting mechanism is capable of driving the vehicle door glass to slide smoothly along the lifting direction without the occurrence of jamming; at the same time, avoiding a sealing failure between the vehicle door glass and a vehicle door body caused by the occurrence of a gap between the end of the vehicle door glass with poor stability and the vehicle door body.

BRIEF DESCRIPTION OF THE DRAWINGS

In order to explain the technical solutions in the embodiment of the present disclosure more clearly, the drawings required in the description of the embodiments will be briefly introduced below. It will be understood that the drawings involved in the following description only illustrate some embodiments of the present disclosure, and those of ordinary skill in the art can obtain other drawings from these drawings without paying any creative effort.

FIG. 1 illustrates a structural diagram of a vehicle door assembly according to the present disclosure.
FIG. 2 illustrates a structural diagram of a vehicle door glass according to a first embodiment.
FIG. 3 illustrates a structural diagram of a first limiting structure according to a first embodiment.
FIG. 4 illustrates a structural diagram of a second limiting structure according to a first embodiment.
FIG. 5 illustrates a structural diagram of a third limiting structure according to a first embodiment.
FIG. 6 illustrates a cross-sectional view of a counterweight structure according to a first embodiment.
FIG. 7 illustrates a structural diagram of a vehicle door glass according to a second embodiment.
FIG. 8 illustrates a cross-sectional view of a counterweight structure according to a second embodiment.
FIG. 9 illustrates a structural diagram of a vehicle door glass according to a third embodiment.
FIG. 10 illustrates a cross-sectional view of a counterweight structure according to a third embodiment.

In the drawings: 1: vehicle door glass; 11: first end; 12: second end; 13: first holder; 14: second holder; 15: bracket hole; 16: inner surface; 17: outer surface; 2: counterweight structure; 21: counterweight block; 22: mounting fixture; 221: first clamping groove; 222: first adhesive layer; 223: second adhesive layer; 224: second clamping groove; 3: first sealing strip; 31: first assembling groove; 32: first lip; 33: second lip; 4: second sealing strip; 41: second assembling groove; 42: third lip; 43: fourth lip; 5: first limiting structure; 51: first guide bracket; 52: first guide groove; 53: first limiting surface; 6: second limiting structure; 61: second guide bracket; 62: second guide groove; 63: second limiting surface; 7: third limiting structure; 71: third guide bracket; 72: third guide groove; 73: third limiting surface; 8: weatherstrip ; 9: lifting mechanism; 91: bracket.

DETAILED DESCRIPTION OF THE EMBODIMENTS

The technical solutions in the embodiments of the present disclosure will be clearly and completely described below with reference to the drawings for the embodiments of the present disclosure. Obviously, those described are only a part, rather than all, of the embodiments of the present disclosure. Based on the embodiments in the present disclosure, any other embodiment obtained by those of ordinary skill in the art without paying any creative effort should fall within the protection scope of the present disclosure.

Embodiment 1

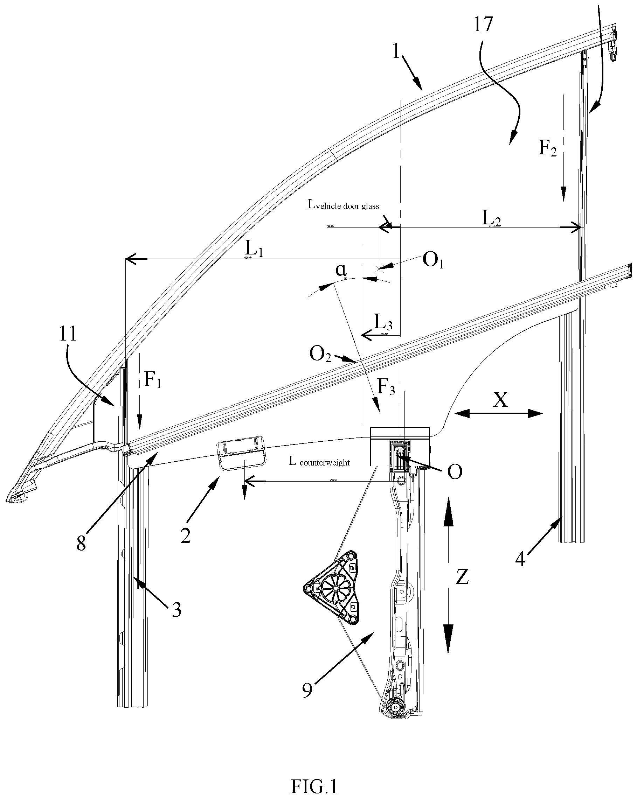

As illustrated in FIG. 1, the present disclosure provides a vehicle door glass assembly, which includes a vehicle door body; a vehicle door glass 1 with a first end 11 and a second end 12 which are opposite to each other along a length direction X thereof, the first end 11 and the second end 12 of the vehicle door glass 1 being configured for sealed sliding fit with the vehicle door body along a lifting direction Z, the vehicle door glass 1 being driven by a lifting mechanism 9 to move along the lifting direction Z, and a force-bearing point between the lifting mechanism 9 and the vehicle door glass 1 being a main support point O; and a counterweight structure 2 mounted on the vehicle door glass 1; in which in a state where the vehicle door glass 1 moves along the lifting direction Z, the center of gravity $O_1$ of the vehicle door glass 1 is adjusted by the counterweight structure 2, and moments of force generated by forces acting on the vehicle door glass 1 relative to the main support point O are balanced with each other.

In the vehicle door glass assembly according to the present disclosure, a counterweight structure 2 is disposed on a vehicle door glass 1, and in a state where the vehicle door glass 1 moves along a lifting direction Z, the center of gravity of the vehicle door glass 1 is adjusted by means of the counterweight structure 2, so that moments of force generated by forces acting on the vehicle door glass 1 relative to a main support point O between a lifting mechanism 9 and the vehicle door glass 1 can be balanced with each other, the stability of an end of the vehicle door glass 1 with poor stability can be improved, and the end of the vehicle door glass 1 with poor stability can be prevented from being tilted towards an end with good stability, thereby ensuring that the lifting mechanism 9 is capable of driving the vehicle door glass 1 to slide smoothly along the lifting direction Z without the occurrence of jamming; at the same time, avoiding a sealing failure between the vehicle door glass 1 and a vehicle door body caused by the occurrence of a gap between the end of the vehicle door glass 1 with poor stability and the vehicle door body.

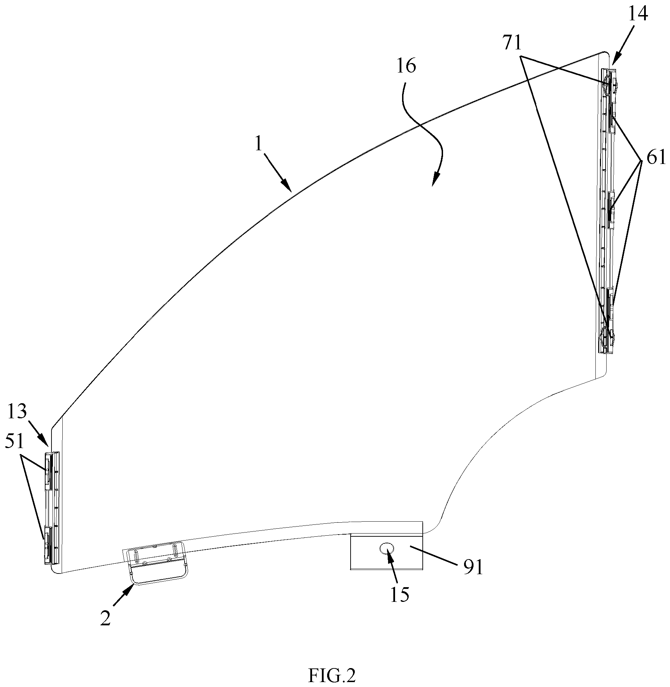

Specifically, the vehicle door glass 1 may be the vehicle door glass 1 on a front vehicle door or on a rear vehicle door. Due to the streamlined design of the vehicle body, the vehicle door glass 1 has an asymmetric structure with respect to its center of gravity, resulting in a great difference in stability between the first end 11 and the second end 12 of the vehicle door glass 1. Therefore, by disposing the counterweight structure 2, the stability of the end of the vehicle door glass 1 with poor stability can be improved. Referring to FIG. 2, the lifting mechanism 9 is connected to the vehicle door glass 1 through a bracket 91. The vehicle door glass 1 is provided with a bracket hole 15 for mounting the bracket 91. A center of the bracket hole 15 is the position of the main support point O. The counterweight structure 2 is not in contact with the lifting mechanism 9, that is, the counterweight structure 2 does not supply power for the lowering of the vehicle door glass 1. The specific structure and the working principle of the lifting mechanism 9 are the same as those in the prior art, which will not be described in detail here.

As illustrated in FIGS. 1 to 5, in this embodiment, the vehicle door glass 1 is of a flush type, that is, an outer surface 17 of the vehicle door glass 1 facing the exterior of the vehicle is substantially flush with an outer surface of the vehicle door body, and only an inner surface 16 of the vehicle door glass 1 facing the interior of the vehicle and an edge of the vehicle door glass 1 are in sealed sliding fit with the vehicle door body. Optionally, the vehicle door glass 1 is of a non-flush type, that is, the inner and outer surfaces of the vehicle door glass are respectively overlapped and in sealed sliding fit with the sealing strip on the vehicle door body. Compared with the non-flush type vehicle door glass, the vehicle door glass 1 of this embodiment is capable of improving the aerodynamic and aesthetic characteristics of the vehicle, but the stability during lifting and sliding and the stability of the seal are insufficient. Thus, by disposing the counterweight structure 2, both the stability of the flush type vehicle door glass 1 during lifting and sliding and the stability of the seal are improved.

In the embodiment of the present disclosure, a length of the first end 11 of the vehicle door glass 1 extending along the lifting direction Z is less than a length of the second end 12 of the vehicle door glass 1 extending along the lifting direction Z, and the center of gravity of the counterweight structure 2 is located between the main support point O and the first end 11 of the vehicle door glass 1. A sealed sliding mating surface between the second end 12 of the vehicle door glass 1 and the vehicle door body is larger than the sealed sliding mating surface between the first end 11 of the vehicle door glass 1 and the vehicle door body, so that the stability of the second end 12 of the vehicle door glass 1 is greater than the stability of the first end 11 of the vehicle door glass 1. The counterweight structure 2 is disposed close to the first end 11 of the vehicle door glass 1 relative to the second end 12 of the vehicle door glass 1, thereby improving the stability of the first end 11 of the vehicle door glass 1. Specifically, the vehicle door glass 1 is the vehicle door glass 1 on a front vehicle door, the first end 11 of the vehicle door glass 1 is a front end of the vehicle door glass 1 close to a vehicle head, and the second end 12 of the vehicle door glass 1 is a rear end of the vehicle door glass 1 close to a rear of the vehicle.

As illustrated in FIG. 1, a weatherstrip 8 is mounted on the vehicle door body, the vehicle door glass 1 passes through the weatherstrip 8 along the lifting direction Z to be in sealed sliding fit with the weatherstrip 8, and the counterweight structure 2 is located below the weatherstrip 8. The counterweight structure 2 is always in an invisible position on the vehicle door, and will not affect the lifting and sliding range of the vehicle door glass 1. Specifically, in a state where the vehicle door glass 1 is completely closed, a distance between the counterweight structure 2 and the weatherstrip 8 is not less than 10 mm, so as to ensure that there will be no interference between the counterweight structure 2 and the weatherstrip 8.

In the embodiment of the present disclosure, the relationship between the moments of force generated by the forces acting on the vehicle door glass 1 relative to the main support point O can be expressed as follows:

$$M_1 + M_3 + M_{\text{vehicle door glass}} + M_{\text{counterweight}} + M_2 = 0,$$

where $M_1$ represents a moment of force generated by a sliding friction force between the first end 11 of the vehicle door glass 1 and the vehicle door body relative to the main support point O, $M_2$ represents a moment of force generated by a sliding friction force between the second end 12 of the vehicle door glass 1 and the vehicle door body relative to the main support point O, $M_3$ represents a moment of force generated by a sliding friction force between the weatherstrip 8 and the vehicle door body relative to the main support point O, $M_{\text{vehicle door glass}}$ represents a moment of force generated by the gravity of the vehicle door glass 1 relative to the main support point O, and $M_{\text{counterweight}}$ represents a moment generated by the gravity of the counterweight structure 2 relative to the main support point O.

The moment of force described in the present disclosure is a vector product of a distance vector from the main support point O to a force action point and the force, a direction from the main support point O to the first end of the vehicle door glass is defined as a positive direction, and a direction from the main support point O to the second end of the vehicle door glass is defined as a negative direction.

In this embodiment, the center $O_2$ of the weatherstrip 8 and the center of gravity $O_1$ of the vehicle door glass 1 are both located between the main support point O and the first end 11 of the vehicle door glass 1, so $M_1$, $M_3$, $M_{\text{vehicle door glass}}$ and $M_{\text{counterweight}}$ are all positive, and $M_2$ is negative. By disposing the center $O_2$ of the weatherstrip 8 and the center of gravity $O_1$ of the vehicle door glass 1 on a side of the main support point O close to the first end 11 of the vehicle door glass 1, it is beneficial to further improving the stability of the first end 11 of the vehicle door glass 1. Optionally, the center of the weatherstrip is located on a side of the main support point close to the second end of the vehicle door glass 1 or in a movement path of the main support point. Optionally, the center of gravity of the vehicle door glass is located on a side of the main support point close to the second end of the vehicle door glass or on the movement path of the main support point, and $M_{vehicle\ door\ glass}$ is zero. Optionally, the center $O_2$ of the weatherstrip is located between the main support point O and the second end of the vehicle door glass, and $M_3$ is negative.

As illustrated in FIGS. 1, 3 and 4, a length direction of the vehicle door glass 1 is X, and a thickness direction of the vehicle door glass 1 is Y. Since the vehicle door glass 1 is thin, the distance from the force acting on the vehicle door glass 1 to the main support point O along the direction Y is almost zero, and the generated moment of force is small, which will not affect the stability of the lifting and sliding of the vehicle door glass 1 and the stability of the seal and then is ignored, that is, the vehicle door glass 1 does not deviate along the direction Y. Thus, it is only necessary to consider the moment of force generated by the force acting on the vehicle door glass 1 relative to the main support point O along the direction X.

Specifically, $M_1 = F_1 \cdot L_1 \cdot \cos\beta$; $M_2 = F_2 \cdot L_2 \cdot \cos\beta$; $M_3 = F_3 \cdot L_3 \cdot \cos\alpha \cdot \cos\beta$; $M_{vehicle\ door\ glass} = m_{vehicle\ door\ glass} g \cdot L_{vehicle\ door\ glass} \cdot \cos\beta$; $M_{counterweight} = +m_{counterweight} g \cdot L_{counterweight} \cos\beta$; where $\alpha$ represents an angle of an included angle between a mid-perpendicular of the weatherstrip 8 and the vertical direction, $\beta$ represents an angle of an included angle between the lifting direction and the vertical direction, $L_1$ represents a distance vector from the main support point O to the first end 11 of the vehicle door glass 1 along the direction X, $F_1$ represents a sliding friction force between the first end 11 of the vehicle door glass 1 and the vehicle door body, $L_2$ represents a distance vector from the main support point O to the second end 12 of the vehicle door glass 1 along the direction X, $F_2$ represents a sliding friction force between the second end 12 of the vehicle door glass 1 and the vehicle door body, $L_3$ represents a distance vector from the main support point O to a midpoint $O_2$ of the weatherstrip 8 along the direction X, $F_3$ represents a sliding friction force between the weatherstrip 8 and the vehicle door glass 1, $L_{vehicle\ door\ glass}$ represents a distance vector from the main support point O to the center of gravity $O_1$ of the vehicle door glass 1 along the direction X, $M_{vehicle\ door\ glass\ 1}$ represents a weight of the vehicle door glass 1, $L_{counterweight}$ represents a distance vector from the main support point O to the center of gravity of the counterweight structure 2 along the direction X, and $m_{counterweight}$ represents a weight of the counterweight structure 2.

In this embodiment, $m_{counterweight}$ is 0.1 kg to 2 kg, optionally 0.3 kg to 1.1 kg. If the counterweight structure 2 is too heavy, an excessive impulse may be easily caused to the vehicle door glass 1 when the vehicle door is opened or closed, and if the counterweight structure 2 is too light, it is impossible to improve the stability of the first end 11 of the vehicle door glass 1. $\beta$ is 0°. Thus the relationship between the moments of force generated by the force acting on the vehicle door glass 1 relative to the main support point along the direction X can be expressed as follows:

$$F_1 \cdot L_1 + F_3 \cdot L_3 \cdot \cos\alpha + m_{vehicle\ door\ glass}\ 1g \cdot L_{vehicle\ door\ glass} + m_{counterweight} g \cdot L_{counterweight} + F_2 \cdot L_2 = 0;$$

that is, $L_{counterweight} = (-F_2 \cdot L_2 - F_1 \cdot L_1 - F_3 \cdot L_3 \cdot \cos\alpha - m_{vehicle\ door\ glass\ 1} g \cdot L_{vehicle\ door\ glass}) / (m_{counterweight} g)$, so as to determine the mounting position of the counterweight structure 2.

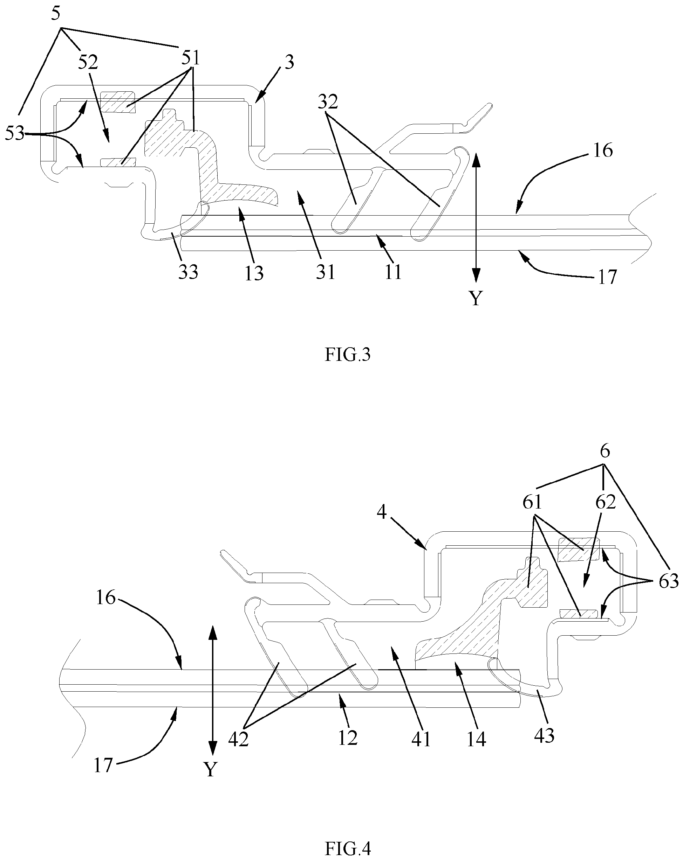

As illustrated in FIG. 1, in the embodiment of the present disclosure, a first sealing strip 3 and a second sealing strip 4 are mounted on the vehicle door body along the lifting direction Z, in which the first end 11 of the vehicle door glass 1 is in sealed sliding fit with the vehicle door body through the first sealing strip 3, and the second end 12 of the vehicle door glass 1 is in sealed sliding fit with the vehicle door body through the second sealing strip 4. Specifically, as illustrated in FIGS. 3 to 5, the outer surface 17 of the vehicle door glass 1 is flush with the first sealing strip 3 and the second sealing strip 4, only the inner surface 16 and the edge of the first end 11 of the vehicle door glass 1 are in sealed sliding fit with the first sealing strip 3, and only the inner surface 16 and the edge of the second end 12 of the vehicle door glass 1 are in sealed sliding fit with the second sealing strip 4.

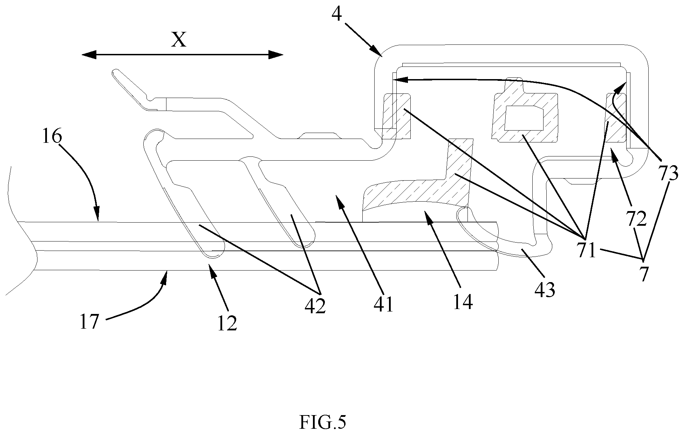

As illustrated in FIG. 3, at least one first limiting structure 5 is disposed between the first end 11 of the vehicle door glass 1 and the first sealing strip 3. As illustrated in FIGS. 4 and 5, at least one second limiting structure 6 and at least one third limiting structure 7 are disposed between the second end 12 of the vehicle door glass 1 and the second sealing strip 4. The first limiting structure 5 and the second limiting structure 6 are cooperated to limit the movement of the vehicle door glass 1 along a thickness direction Y of the vehicle door glass, and the third limiting structure 7 limits the movement of the vehicle door glass 1 along the length direction X of the vehicle door glass. Because of a long extension length of the second end 12 of the vehicle door glass 1 along the lifting direction Z, and a short extension length of the first end 11 of the vehicle door glass 1 along the lifting direction Z, it is possible to ensure that the vehicle door glass 1 can be reliably limited in both the direction X and the direction Y by simultaneously disposing the second limiting structure 6 and the third limiting structure 7 between the second end 12 of the vehicle door glass 1 and the second sealing strip 4, and only disposing the first limiting structure 5 between the first end 11 of the vehicle door glass 1 and the first sealing strip 3.

As illustrated in FIG. 3, in the embodiment of the present disclosure, the first limiting structure 5 includes a first guide bracket 51, which is mounted on the first end 11 of the vehicle door glass 1 along the lifting direction Z; a first guide groove 52 is formed in the first sealing strip 3 along the lifting direction, and provided therein with two first limiting surfaces 53 opposite to each other along the thickness direction Y of the vehicle door glass 1; and the first guide bracket 51 is abutted against the two first limiting surfaces 53 and is slidable in the first guide groove 52. Specifically, reference numeral 51 in FIG. 3 refers to the cross-sections of the same first guide bracket 51. Referring to FIG. 2, the two first guide brackets 51 are mounted on the inner surface 16 of the first end 11 of the vehicle door glass 1 through the first holder 13. The first sealing strip 3 is further provided with a first assembling groove 31 along the lifting direction Z, and the first assembling groove 31 is communicated with the first guide groove 52 and cooperated with the first end 11 of the vehicle door glass 1. At least one first lip 32 and at least one second lip 33 are disposed in the first assembling groove 31, in which the first lip 32 is in sealed sliding fit with the inner surface 16 of the first end 11 of the vehicle door glass 1, and the second lip 33 is in sealed sliding fit with the edge of the first end 11 of the vehicle door glass 1.

As illustrated in FIGS. 4 and 5, the second limiting structure 6 includes a second guide bracket 61, and the third limiting structure 7 includes a third guide bracket 71, the second guide bracket 61 and the third guide bracket 71 are mounted on the second end 12 of the vehicle door glass 1 at an interval along the lifting direction Z, and the second sealing strip 4 is provided with a second guide groove 62 along the lifting direction. The second guide groove 62 is provided therein with two second limiting surfaces 63 and two third limiting surfaces 73, the two second limiting surfaces 63 are oppositely disposed along the thickness direction Y of the vehicle door glass 1, and the two third limiting surfaces 73 are oppositely disposed along the length direction X of the vehicle door glass 1. The second guide bracket 61 is abutted against the two second limiting surfaces 63 and is slidable in the second guide groove 62, and the third guide bracket 71 is abutted against the two third limiting surfaces 73 and is slidable in the second guide groove 62.

Specifically, reference numeral 61 in FIG. 4 refers to the cross-sections of the same second guide bracket 61, and reference numeral 71 in FIG. 5 refers to the cross-sections of the same third guide bracket 71. Referring to FIG. 2, three second guide brackets 61 and two third guide brackets 71 are mounted on the inner surface 16 of the second end 12 of the vehicle door glass 1 through the second holder 14. The two third guide brackets 71 are disposed close to a top end and a bottom end of the vehicle door glass 1, and the three second guide brackets 61 are arranged between the two third guide brackets 71 at intervals. The second sealing strip 4 is further provided with a second assembling groove 41 along the lifting direction Z, and the second assembling groove 41 is communicated with the second guide groove 62 and the third guide groove 72, and the second assembling groove 41 is cooperated with the second end 12 of the vehicle door glass 1. The second assembling groove 41 is provided therein with at least one third lip 42 and at least one fourth lip 43, wherein the third lip 42 is in sealed sliding fit with the inner surface 16 of the second end 12 of the vehicle door glass 1, and the fourth lip 43 is in sealed sliding fit with the edge of the second end 12 of the vehicle door glass 1.

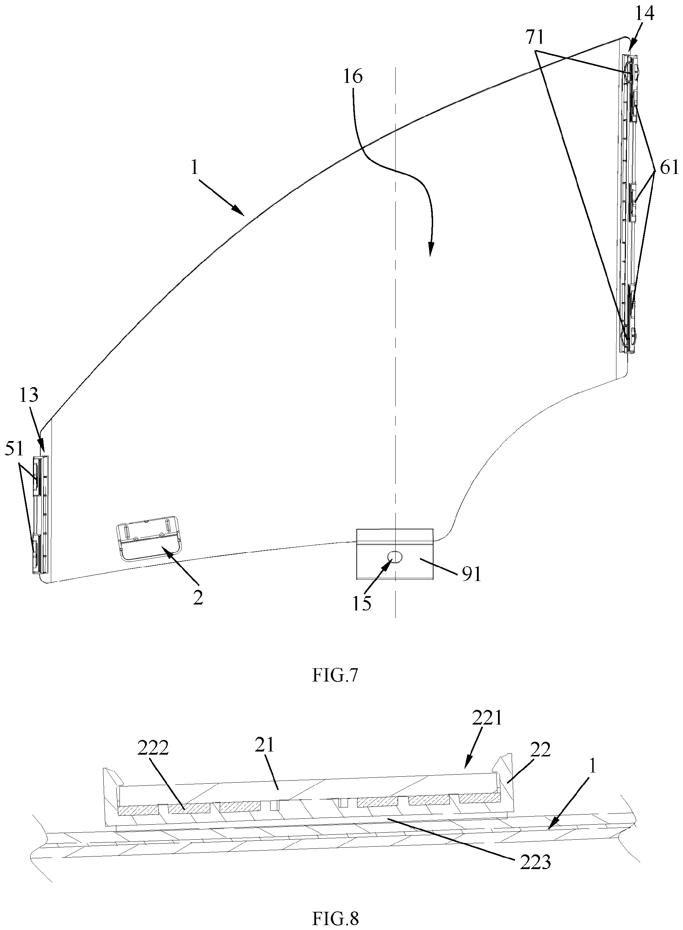

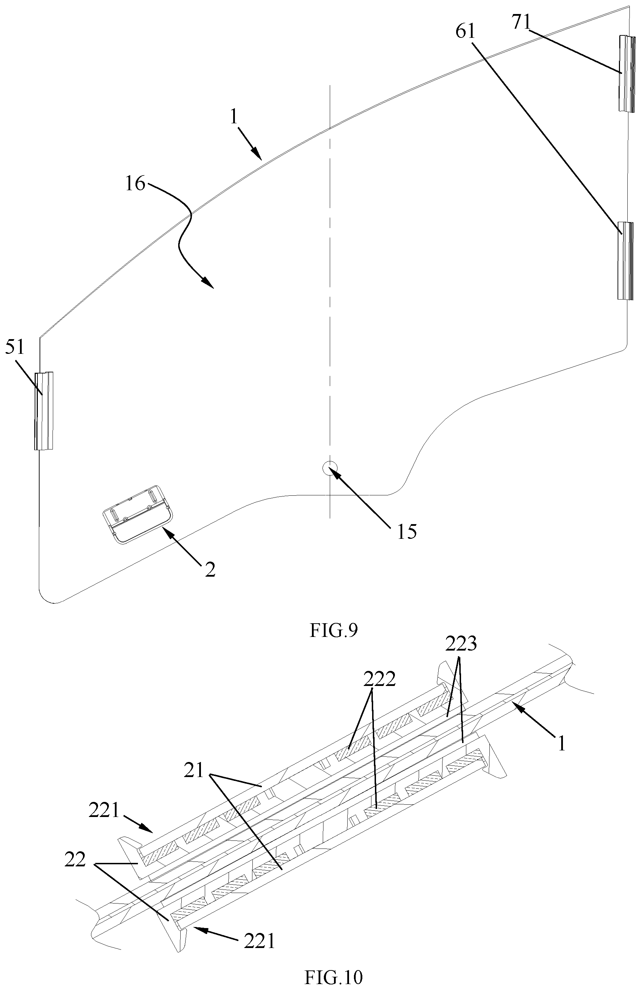

As illustrated in FIGS. 2 and 7, in this embodiment and a second embodiment, two first guide brackets 51 and the first holder 13 are integrated. Three second guide brackets 61, two third guide brackets 71 and the second holder 14 are integrated. As illustrated in FIG. 9, in a third embodiment, one of the first guide brackets 51 is directly fixed on the inner surface 16 of the first end 11 of the vehicle door glass 1. One of the second guide brackets 61 and one of the third guide brackets 71 are directly fixed to the inner surface 16 of the second end 12 of the vehicle door glass 1.

As illustrated in FIGS. 3, 4 and 5, a sliding friction force between the first end 11 of the vehicle door glass 1 and the first sealing strip 3 is $f_1$, a sliding friction force between the first guide bracket 51 and the first sealing strip 3 is $F_{1Y}$, a sliding friction force between the second guide bracket 61 and the second sealing strip 4 is $F_{2Y}$, a sliding friction force between the third guide bracket 71 and the second sealing strip 4 is $F_{2X}$, a sliding friction force between the second end 12 of the vehicle door glass 1 and the second sealing strip 4 is $f_2$, and there are the following relationships:

$$F_1 = F_{1Y} + f_1, \text{ and } F_2 = F_{2X} + F_{2Y} + f_2.$$

Since the vehicle door glass 1 has no deviation along the direction Y, the magnitudes of $F_{2Y}$ and $F_{1Y}$ are similar, and the magnitudes of $f_2$ and $f_1$ are similar. Due to the existence of $F_{2X}$, the stability of the second end 12 of the vehicle door glass 1 during lifting and sliding is stronger than that of the first end 11 of the vehicle door glass 1 during lifting and sliding. Therefore, by adding the counterweight structure 2 on a side of the main support point O close to the first end 11 of the vehicle door glass 1, it is beneficial to improving the stability and balance of the first end 11 of the vehicle door glass 1 and reducing the tilting risk of the first end 11 of the vehicle door glass 1.

After the first sealing strip 3 and the second sealing strip 4 are abraded after long-term sliding, since the total length of the second guide bracket 61 and the third guide bracket 71 is long, an abrasion amount of the second sealing strip 4 is generally greater than the abrasion amount of the first sealing strip 3. However, because of the friction forces between the second guide bracket 61 and the second sealing strip 4, and between the third guide bracket 71 and the second sealing strip 4 are both existed along the direction X and the direction Y, even if the second sealing strip 4 is abraded, the friction forces between the second guide bracket 61 and the second sealing strip 4, and the friction forces between the third guide bracket 71 and the second sealing strip 4, are still greater than the friction force between the first guide bracket 51 and the first sealing strip 3, so that the vehicle door glass 1 is still prone to tilt towards the second sealing strip 4, resulting in gaps between the first guide bracket 51 and the first sealing strip 3, and between the vehicle door glass 1 and the first sealing strip 3. According to the present disclosure, by adding the counterweight structure 2 between the first guide bracket 51 and the main support point O, it is beneficial to increasing the moment of force of the vehicle door glass 1 on a side of the main support point O close to the first guide bracket 51, and reducing the risk of gaps forming between the first guide bracket 51 and the first sealing strip 3, and between the vehicle door glass 1 and the first sealing strip 3 caused by the deviation of the vehicle door glass 1 towards the second sealing strip 4.

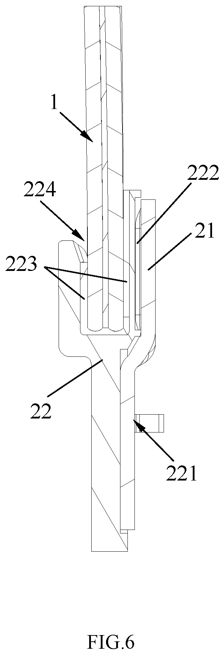

As illustrated in FIGS. 6 to 10, in the embodiment of the present disclosure, the counterweight structure 2 includes at least one counterweight block 21, the vehicle door glass 1 includes the inner surface 16 facing the interior of a vehicle and the outer surface 17 facing the exterior of the vehicle, and the counterweight block 21 is mounted on the inner surface 16, the outer surface 17 and/or an edge of the vehicle door glass 1.

As illustrated in FIGS. 6, 8 and 10, the counterweight block 21 is mounted on the vehicle door glass 1 through a mounting fixture 22, which is adhesive fixed on the inner surface 16, the outer surface 17 and/or the edge of the vehicle door glass 1, and the counterweight block 21 is clamped on the mounting fixture 22 and adhesive fixed. In a process of adhesive fixation, it is unnecessary to cooperate with other tooling to clamp and fix the counterweight block 21. Specifically, the mounting fixture 22 is provided with at least one clamping groove.

As illustrated in FIG. 6, in this embodiment, the mounting fixture 22 is provided with a first clamping groove 221 and a second clamping groove 224, and the counterweight block 21 is clamped in the first clamping groove 221 and adhesive fixed with the mounting fixture 22 by a first adhesive layer 222. The edge of the vehicle door glass 1 extends into the second clamping groove 224 and is adhesive fixed by a second adhesive layer 223.

As illustrated in FIG. 8, in a second embodiment, the mounting fixture 22 is only provided with the first clamping groove 221, and the counterweight block 21 is clamped in the first clamping groove 221 and adhesive fixed by the first adhesive layer 222. The mounting fixture 22 is adhesive fixed on the inner surface 16 or the outer surface 17 of the vehicle door glass 1 by the second adhesive layer 223.

As illustrated in FIG. 10, in a third embodiment, two counterweight blocks 21 with the same weight are symmetrically clamped in the first clamping grooves 221 of two mounting fixtures 22, and are adhesive fixed by the first adhesive layer 222. The two mounting fixtures 22 are symmetrically adhesive fixed on the inner surface 16 and the outer surface 17 of the vehicle door glass 1 by two second adhesive layers 223.

Optionally, the counterweight block is adhesive directly fixed on the vehicle door glass by an adhesive tape, or directly adhesive fixed on the vehicle door glass by polyurethane glue.

Embodiment 2

Referring to FIG. 1, the present disclosure further provides a vehicle door assembly, which includes a vehicle door glass assembly, and further includes: a vehicle door body; and a lifting mechanism 9 mounted on the vehicle door body. The vehicle door glass assembly, the vehicle door body and the lifting mechanism 9 in this embodiment are the same as those in Embodiment 1 in terms of the specific structure, the working principle and the advantageous effects, which will not be described in detail here.

Embodiment 3

The present disclosure further provides a vehicle, which includes a vehicle door assembly. The vehicle door assembly in this embodiment is the same as that in Embodiment 2 in terms of the specific structure, the working principle and the advantageous effects, which will not be described in detail here.

Those described above are only several embodiments of the present disclosure, and those skilled in the art can make various modifications or variations to the embodiments of the present disclosure according to the disclosure of the application document without departing from the spirit and scope of the present disclosure.

**Claims**

1.   A vehicle door glass assembly, comprising:

a vehicle door glass with a first end and a second end, which are opposite to each other along a length direction of the vehicle door glass, the first end and the second end of the vehicle door glass being configured for sealed sliding fit with a vehicle door body along a lifting direction, the vehicle door glass being driven by a lifting mechanism to move along the lifting direction, and a force-bearing point between the lifting mechanism and the vehicle door glass being a main support point; and
a counterweight structure mounted on the vehicle door glass;
wherein in a state where the vehicle door glass moves along the lifting direction, the center of gravity of the vehicle door glass is adjusted by the counterweight structure, and moments of force generated by forces acting on the vehicle door glass relative to the main support point are balanced with each other.

2. The vehicle door glass assembly according to claim 1, wherein,
a length of the first end of the vehicle door glass extending along the lifting direction is less than a length of the second end of the vehicle door glass extending along the lifting direction, and the center of gravity of the counterweight structure is located between the main support point and the first end of the vehicle door glass.

3. The vehicle door glass assembly according to claim 2, wherein,
a weatherstrip is mounted on the vehicle door body, the vehicle door glass passes through the weatherstrip along the lifting direction to be in sealed sliding fit with the weatherstrip , and the counterweight structure is located below the weatherstrip .

4. The vehicle door glass assembly according to claim 3, wherein,

the moments of force generated by the forces acting on the vehicle door glass relative to the main support point have a relationship:

$$M_1+M_3+M_{\text{vehicle door glass}}+M_{\text{counterweight}}+M_2=0,$$

where $M_1$ represents a moment of force generated by a sliding friction force between the first end of the vehicle door glass and the vehicle door body relative to the main support point, $M_2$ represents a moment of force generated by a sliding friction force between the second end of the vehicle door glass and the vehicle door body relative to the main support point, $M_3$ represents a moment of force generated by a sliding friction force between the weatherstrip and the vehicle door body relative to the main support point, $M_{\text{vehicle door glass}}$ represents a moment of force generated by the gravity of the vehicle door glass relative to the main support point, and $M_{\text{counterweight}}$ represents a moment of force generated by the gravity of the counterweight structure relative to the main support point.

5. The vehicle door glass assembly according to claim 1, wherein,
a first sealing strip and a second sealing strip are mounted on the vehicle door body along the lifting direction, the first end of the vehicle door glass is in sealed sliding fit with the vehicle door body through the first sealing strip, and the second end of the vehicle door glass is in sealed sliding fit with the vehicle door body through the second sealing strip.

6. The vehicle door glass assembly according to claim 5, wherein,
at least one first limiting structure is disposed between the first end of the vehicle door glass and the first sealing strip, at least one second limiting structure and at least one third limiting structure are disposed between the second end of the vehicle door glass and the second sealing strip, the first limiting structure and the second limiting structure are cooperated to limit the movement of the vehicle door glass along a thickness direction of the vehicle door glass, and the third limiting structure limits the movement of the vehicle door glass along the length direction of the vehicle door glass.

7. The vehicle door glass assembly according to claim 6, wherein,
the first limiting structure comprises a first guide bracket, which is mounted on the first end of the vehicle door glass along the lifting direction; a first guide groove is formed in the first sealing strip along the lifting direction, and two first limiting surfaces opposite to each other along the thickness direction of the vehicle door glass are provided in the first guide groove; and the first guide bracket abuts against the two first limiting surfaces and is slidable in the first guide groove.

8. The vehicle door glass assembly according to claim 6, wherein,
the second limiting structure comprises a second guide bracket, and the third limiting structure comprises a third guide bracket; the second guide bracket and the third guide bracket are mounted on the second end of the vehicle door glass at an interval along the lifting direction, and the second sealing strip is provided with a second guide groove along the lifting direction; the second guide groove is provided therein with two second limiting surfaces and two third limiting surfaces; the two second limiting surfaces are oppositely disposed along the thickness direction of the vehicle door glass, and the two third limiting surfaces are oppositely disposed along the length direction of the vehicle door glass; the second guide bracket abuts against the two second limiting surfaces and is slidable in the second guide groove, and the third guide bracket abuts against the two third limiting surfaces and is slidable in the second guide groove.

9. The vehicle door glass assembly according to any one of claims 1 to 8, wherein,
the counterweight structure comprises at least one counterweight block, the vehicle door glass comprises an inner surface facing the interior of a vehicle and an outer surface facing the exterior of the vehicle, and the counterweight block is mounted on the inner surface, the outer surface and/or an edge of the vehicle door glass.

10. The vehicle door glass assembly according to claim 9, wherein,
the counterweight block is mounted on the vehicle door glass through a mounting fixture, which is adhesively fixed on the inner surface, the outer surface and/or the edge of the vehicle door glass, and the counterweight block is clamped on the mounting fixture and adhesively fixed.

11. A vehicle door assembly, comprising the vehicle door glass assembly according to any one of claims 1 to 10, the vehicle door assembly further comprising:

   the vehicle door main body; and
   the lifting mechanism mounted on the vehicle door body.

12. A vehicle, comprising the vehicle door assembly according to claim 11.

FIG.1

FIG.2

FIG.3

FIG.4

FIG.5

FIG.6

FIG.7

FIG.8

FIG.9

FIG.10

## INTERNATIONAL SEARCH REPORT

International application No.

**PCT/CN2023/103585**

### A. CLASSIFICATION OF SUBJECT MATTER

B60J1/17(2006.01)i; E05F15/689(2015.01)i; B60J10/76(2016.01)i

According to International Patent Classification (IPC) or to both national classification and IPC

### B. FIELDS SEARCHED

Minimum documentation searched (classification system followed by classification symbols)

IPC: B60J, E05F

Documentation searched other than minimum documentation to the extent that such documents are included in the fields searched

Electronic data base consulted during the international search (name of data base and, where practicable, search terms used)

CNABS, CNTXT, ENTXTC, VEN, CNKI: 福耀玻璃, 张建明, 吴声桂, 陈立东, 车门, 车窗, 玻璃, 升降, 调高, 举升, 滑动, 密封, 卡滞, 卡顿, 平衡, 重心, 调节, 调整, 配重, 质量块, 重量块, 调重块, window, glass, slide, glide, airproof, pressurize, counterweight, equalizer, equilibrator, balance, counterpoise, equation, equilibrium, equipoise, poise, mass, quality, centroid, barycenter, gravity

### C. DOCUMENTS CONSIDERED TO BE RELEVANT

| Category* | Citation of document, with indication, where appropriate, of the relevant passages | Relevant to claim No. |
|---|---|---|
| PX | CN 115027237 A (FUYAO GLASS INDUSTRY GROUP CO., LTD.) 09 September 2022 (2022-09-09)<br>claims 1-12 | 1-12 |
| Y | CN 104986020 A (ANHUI JIANGHUAI AUTOMOBILE GROUP CORP., LTD.) 21 October 2015 (2015-10-21)<br>description, paragraphs 2-53, and figures 1-4 | 1-12 |
| Y | FR 2732274 A1 (PEUGEOT) 04 October 1996 (1996-10-04)<br>description, page 1, line 1 to page 5, line 4, and figures 1-7 | 1-12 |
| Y | JP 2012056536 A (HONDA MOTOR CO., LTD.) 22 March 2012 (2012-03-22)<br>description, paragraphs 22-86, and figures 1-8 | 5-8 |
| A | CN 110962552 A (GREAT WALL MOTOR COMPANY LIMITED) 07 April 2020 (2020-04-07)<br>entire document | 1-12 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 September 2023** | **18 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/103585**

**C. DOCUMENTS CONSIDERED TO BE RELEVANT**

| Category* | Citation of document, with indication, where appropriate, of the relevant passages | Relevant to claim No. |
|---|---|---|
| A | CN 102883902 A (TOYOTA MOTOR CORPORATION) 16 January 2013 (2013-01-16)<br>entire document | 1-12 |
| A | CN 2888030 Y (CHONGQING CHANG'AN AUTOMOBILE CO., LTD.) 11 April 2007 (2007-04-11)<br>entire document | 1-12 |
| A | JP 2016064717 A (TOYOTA AUTO BODY CO., LTD.) 28 April 2016 (2016-04-28)<br>entire document | 1-12 |

**INTERNATIONAL SEARCH REPORT**
Information on patent family members

International application No.

**PCT/CN2023/103585**

| Patent document cited in search report | | | Publication date (day/month/year) | Patent family member(s) | | | Publication date (day/month/year) |
|---|---|---|---|---|---|---|---|
| CN | 115027237 | A | 09 September 2022 | None | | | |
| CN | 104986020 | A | 21 October 2015 | None | | | |
| FR | 2732274 | A1 | 04 October 1996 | None | | | |
| JP | 2012056536 | A | 22 March 2012 | None | | | |
| CN | 110962552 | A | 07 April 2020 | None | | | |
| CN | 102883902 | A | 16 January 2013 | JPWO | 2011138834 | A1 | 22 July 2013 |
| | | | | JP | 5333662 | B2 | 06 November 2013 |
| | | | | US | 2013050797 | A1 | 28 February 2013 |
| | | | | WO | 2011138834 | A1 | 10 November 2011 |
| | | | | EP | 2567842 | A1 | 13 March 2013 |
| CN | 2888030 | Y | 11 April 2007 | None | | | |
| JP | 2016064717 | A | 28 April 2016 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210762585